# EUROPEAN PATENT SPECIFICATION

(11) **EP 2 977 420 B1**
(45) Date of publication and mention of the grant of the patent: **05.02.2020**
(21) Application number: 14768146.4
(22) Date of filing: 13.03.2014
(51) Int. Cl.: C09J 109/04, B32B 25/10, C09J 4/00, D06M 15/693, C08F 220/44

(54) **ADHESIVE AGENT COMPOSITION**
HAFTMITTELZUSAMMENSETZUNG
COMPOSITION D'AGENT ADHÉSIF

(30) Priority: 22.03.2013 JP 2013059382
(43) Date of publication of application: 27.01.2016
(73) Proprietor: Zeon Corporation, Tokyo 100-8246 (JP)
(72) Inventor: NAKASHIMA, Tomonori, Tokyo 100-8246 (JP); SAKAMOTO, Masato, Tokyo 100-8246 (JP)
(74) Representative: Adam, Holger
(86) International application number: PCT/JP2014/056625
(87) International publication number: WO 2014/148345

(56) References cited:
- EP-A1- 1 964 882
- EP-A1- 2 692 788
- WO-A1-2008/041615
- WO-A1-2011/010716
- WO-A1-2013/031801
- JP-A- S6 259 678
- JP-A- 2004 250 709
- JP-A- 2006 527 777
- JP-A- 2008 274 210
- US-A1- 2011 301 300

## Description

### TECHNICAL FIELD

The present invention relates to an adhesive composition comprising latex of a highly saturated nitrile rubber.

### BACKGROUND ART

A composite of rubber and fiber is used in various fields such as belt, rubber hose, diaphragm, tire, etc. In the field of belt, there are a timing belt for automobile, polyribbed belt, wrapped belt, V belt, etc.; and they are normally made by a composite of a base cloth of woven fabric and a rubber. For instance, a canvas protects around belt of V belt and a covering cloth is layered on teeth of toothed belt.

Conventionally, oil resistant rubbers such as chloroprene rubber and acrylonitrile-butadiene copolymer rubber were mainly used for the rubber. In recent years, however, a high-level heat resistance is demanding in order to cope with automobile exhaust gas restriction countermeasure, downsizing of engine compartment for light weighting of automobile, sealing of engine compartment for noise countermeasure, etc. Therefore, a highly saturated nitrile rubber resistant to both oil and heat is becoming used.

Taking an example of a timing belt, in which teeth are covered with a base cloth of nylon, the base cloth is generally treated with a solvent-based rubber paste. This is to improve an adhesive strength between the rubber and the base cloth and to inhibit abrasion by an engagement of belt and a toothed wheel. Recently, however, treatment techniques using water based adhesives instead of techniques using solvent based rubber pastes are demanding in order to prevent an environmental pollution by organic solvents.

As an example of the treatment techniques using water based adhesives, JP H06-286015 A discloses an adhesive composition including a carboxyl group containing highly saturated nitrile rubber latex and a resorcinol-formaldehyde resin. However, requests to materials are becoming more severe along with improved performances of automobile engine compartments. Thus, there was a further demand for an adhesive composition which is able to form an adhesive layer superior in abrasion resistance after heat aging.

WO2013/031801A discloses an adhesive composition containing a latex of a carboxyl group-containing highly saturated nitrile rubber (A) and a crosslinking aid (B) such as resorcinol-formaldehyde resin, maleimide compound, melamine resin, epoxy resin, isocyanate resin and organic peroxide. WO2013/031801A however mentions neither details of the maleimide compound, nor a ratio of amount of the maleimide compound to the latex of the highly saturated nitrile rubber (A).

WO2008/041615A discloses a reinforcing code treated with an aqueous adhesive composition containing a carboxyl group-containing, optionally hydrogenated nitrile rubber and a crosslinking agent such as maleimide compound, polyisocyanate, quinonedioxime and aromatic nitroso-compound. WO2008/041615A however does not mention details of the carboxyl group-containing nitrile rubber.

WO2011-010716A discloses a combination of a latex of carboxyl group-containing highly saturated nitrile rubber, an adhesive resin such as a resorcinol-formaldehyde resin, melamine resin, epoxy resin, and isocyanate resin, and a crosslinking aid such as p-quinone dioxime, methacrylic acid ester, allyl compound, maleimide compound and sulfur. WO2011-010716A however does not disclose an adhesive composition containing the carboxyl group-containing nitrile rubber latex and maleimide compound, but not containing any adhesive resin.

EP1964882A1 discloses a crosslinkable rubber composition containing a carboxyl group-containing hydrogenated nitrile rubber an aromatic secondary amine-based anti-aging agent and a polyamine-based crosslinking agent.

EP2692788A1 discloses a highly saturated nitrile rubber composition containing a carboxyl group-containing highly saturated nitrile rubber (Al), a highly saturated nitrile rubber (A2) and a polyamide resin.

US2011/301300A1 discloses a nitrile group-containing hydrogenated rubber having an unsaturated dicarboxylic acid mono ester unit.

JP2004-250709A discloses a rubber composition containing hydrogenated NBR, peroide-based crosslinking agent and resorcinol- formaldehyde resin.

However, none of the aforegoing discloses a latex-type adhesive composition.

JP2006-527777A discloses an adhesive composition containing a carboxyl group-containing hydrogenated nitrile rubber. Preferable monomers for providing a carboxyl group include acrylic acid, methacrylyc acid, maleic acid, fumaric acid etc.(see [0023]). JP2006-527777A however mentions neither the carboxyl group-containing hydrogenated nitrile rubber having a monomer unit of dicarboxylic acid monoester, nor maleimide compounds as a crosslinking aid.

JP S62-59678A and JP2008-274210A each disclose an adhesive compound for additive printing circuit board containing a nitrile rubber and a maleimide derivative having 2 or more of maleimide group. Both of these documents are silent about a latex-type adhesive composition.

### SUMMARY OF THE INVENTION

### Technical Problems

The object of the present invention is to provide an adhesive composition which enables to form an adhesive layer superior in abrasion resistance after heat aging.

### Solution to Problem

By keen examination for solving said problem, the inventors have found that an object of the present invention can be achieved by an adhesive composition including: latex of a highly saturated nitrile rubber comprising a specific amount of a specific monomer unit; and a specific crosslinking aid. The present invention was attained based on such knowledge.

According to the present invention, an adhesive composition including a latex of a highly saturated nitrile rubber (A), comprising 10 to 55 wt% of α,β-ethylenically unsaturated nitrile monomer unit, 25 to 89 wt% of conjugated diene monomer unit and 1 to 20 wt% of α,β-ethylenically unsaturated dicarboxylic acid monoester monomer unit and having a iodine value measured in accordance with JIS K6235 of 120 or less; and a crosslinking aid (B) comprising 2 or more ethylenically unsaturated groups in a molecule and is maleimides, is provided.

The α,β-ethylenically unsaturated dicarboxylic acid monoester monomer unit above is preferably α,β-ethylenically unsaturated dicarboxylic acid monoalkylester monomer unit, and more preferably, mono n-butyl maleate unit.

Further, in the invention, the composite of a fiber base material and a highly saturated nitrile rubber, obtained by bonding the fiber base material and the highly saturated nitrile rubber with the above adhesive composition, is provided. The composite is preferably belt, hose, diaphragm, or tire.

### EFFECTS OF THE INVENTION

According to the present invention, an adhesive composition, which can form an adhesive layer superior in an abrasion resistance property after heat aging, can be provided.

### BEST MODE FOR WORKING THE INVENTION

The adhesive composition according to the present invention is described in claim 1.

### A highly saturated nitrile rubber (A)

A highly saturated nitrile rubber (A) of the invention is a rubber obtained via a copolymerization process of a, β-ethylenically unsaturated nitrile monomer, a conjugated diene monomer, α,β-ethylenically unsaturated dicarboxylic acid monoester monomer, and other monomers added as needed which can copolymerize with each of said monomers. The rubber shows an iodine value of 120 or less.

α,β-ethylenically unsaturated nitrile monomer is not particularly limited with the proviso that it is a, β-ethylenically unsaturated compound comprising nitrile group; and there may be mentioned acrylonitrile; α-halogenoacrylonitrile such as α-chloroacrylonitrile, α-bromoacrylonitrile; α-alkylacrylonitrile such as methacrylonitrile; etc. Among these, acrylonitrile and methacrylonitrile are preferable, and acrylonitrile is the most preferable. a, β-ethylenically unsaturated nitrile monomer may be used alone or in combination.

A content of α,β-ethylenically unsaturated nitrile monomer unit with respect to all monomer units constituting highly saturated nitrile rubber (A) is 10 to 55 wt%, preferably 20 to 53 wt% and more preferably 25 to 50 wt%. In case when a content of α,β-ethylenically unsaturated nitrile monomer unit is too small, oil resistance of the obtained hardened adhesive layer (an adhesive composition hardened layer, formed after bonding using the adhesion composition of the invention) may decrease, while too large, low-temperature resistance thereof may decrease.

The conjugated diene monomer is not particularly limited, however, conjugated diene monomers of carbon numbers 4 to 6 such as 1,3-butadiene, isoprene, 2,3-dimethyl-1,3-butadiene, 1,3-pentadiene, etc. are preferable, 1,3-butadiene and isoprene are more preferable, and 1,3-butadiene is the most preferable. Said conjugated diene monomers may be used alone or in combination.

A content of the conjugated diene monomer unit with respect to all monomer units constituting highly saturated nitrile rubber (A) is 25 to 89 wt%, preferably 32 to 78 wt% and more preferably 40 to 73 wt%. In case when the content of the conjugated diene monomer unit is too small, flexibility of the obtained hardened adhesive layer may decrease, while too large, heat resistance and chemical stability thereof may deteriorate. The content amount of the conjugated diene monomer unit includes hydrogenated parts, in case when copolymer is hydrogenated as described below.

Examples of the α,β-ethylenically unsaturated dicarboxylic acid monoester monomer may include α,β-ethylenically unsaturated dicarboxylic acid monoalkylester monomer such as monomethyl maleate, monoethyl maleate, monopropyl maleate, mono-n-butyl maleate, monomethyl fumarate, monoethyl fumarate, monopropyl fumarate, mono-n-butyl fumarate, monomethyl itaconate, monoethyl itaconate, monopropyl itaconate, mono-n-butyl itaconate, monomethyl citraconate, monoethyl citraconate, monopropyl citraconate and mono-n-butyl citraconate; α,β-ethylenically unsaturated dicarboxylic acid monocycloalkylester monomer such as monocyclopentyl maleate, monocyclohexyl maleate, monocycloheptyl maleate, monocyclopentyl fumarate, monocyclohexyl fumarate, monocycloheptyl fumarate, monocyclopentyl itaconate, monocyclohexyl itaconate, monocycloheptyl itaconate, monocyclopentyl citraconate, monocyclohexyl citraconate and monocycloheptyl citraconate; α,β-ethylenically unsaturated dicarboxylic acid monoalkylcycloalkylester monomer such as monomethylcyclopentyl maleate, monoethylcyclohexyl maleate, monomethylcyclopentyl fumarate, monoethylcyclohexyl fumarate, monomethylcyclopentyl itaconate, monoethylcyclohexyl itaconate, monomethylcyclopentyl citraconate and monoethylcyclohexyl citraconate; α,β-ethylenically unsaturated dicarboxylic acid monohydroxyalkylester monomer such as mono-2-hydroxyethyl maleate, mono-3-hydroxypropyl maleate, mono-2-hydroxyethyl fumarate, mono-2-hydroxypropyl fumarate, mono-2-hydroxyethyl itaconate, mono-3-hydroxypropyl itaconate and mono-2-hydroxyethyl citraconate; α,β-ethylenically unsaturated dicarboxylic acid monoester monomer including alicyclic structure such as monocyclohexenyl maleate and monocyclohexenyl fumarate; etc. Among all, a, β-ethylenically unsaturated dicarboxylic acid monoalkylester monomer is preferable, monoalkylester maleate is more preferable, and mono-n-butyl maleate is the most preferable to make effects of the invention remarkable. Carbon number in alkyl group of the above alkylester is preferably 2 to 8.

A content of α,β-ethylenicatly unsaturated dicarboxylic acid monoester monomer unit with respect to all monomer units constituting highly saturated nitrile rubber (A) is 1 to 20 wt%, preferably 2 to 15 wt% and more preferably 2 to 10 wt%. In case when a content of α,β-ethylenically unsaturated dicarboxylic acid monoester monomer unit is within the above range, an adhesive composition which enables to form an adhesive layer superior in abrasion resistance after heat aging can be easily obtained.

Highly saturated nitrile rubber (A) of the invention may be a copolymerization of α,β-ethylenically unsaturated nitrile monomer, conjugated diene monomer, α,β-ethylenically unsaturated dicarboxylic acid monoester monomer and the other monomers copolymerizable with each of said monomers, in such a range as not to deteriorate the effects of the invention.

Examples of the other monomers may include ethylene, α-olefin monomer, aromatic vinyl monomer, a carboxyl group containing monomer besides α,β-ethylenically unsaturated dicarboxylic acid monoester monomer (including polycarboxylic acid anhydride), α,β-ethylenically unsaturated carboxylic acid ester monomer (which does not include unsubstituted(free) carboxyl group which is not esterified), fluorine containing vinyl monomer, copolymerizable anti-aging agent, etc.

Carbon number of said α-olefin monomer is preferably 3 to 12; and there may be exemplified propylene, 1-butene, 4-methyl-1-pentene, 1-hexene, 1-octene, etc.

As the aromatic vinyl monomer, styrene, α-methylstyrene, vinylpyridine, etc., may be exemplified.

Examples of carboxyl group containing monomer besides α,β-ethylenically unsaturated dicarboxylic acid monoester monomer (including polycarboxylic acid anhydride) may include α,β-ethylenically unsaturated monocarboxylic acid monomer such as acrylic acid, methylacrylic acid, ethylacrylic acid, crotonic acid and cinnamic acid; α,β-ethylenically unsaturated polycarboxylic acid such as fumaric acid, maleic acid, itaconic acid, citraconic acid, mesaconic acid, glutaconic acid, allyl malonic acid and teraconic acid; α,β-unsaturated polycarboxylic acid anhydride such as maleic acid anhydride, itaconic acid anhydride and citraconic acid anhydride, etc.

Examples of α,β-ethylenically unsaturated carboxylic acid ester monomer (which does not include unsubstituted (free) carboxyl group which is not esterified) may include (meth)acrylic ester (abbr. for methacrylate ester and acrylate ester hereinafter) including an acrylic group with carbon number of 1 to 18 such as methyl acrylate, ethyl acrylate, n-butyl acrylate, n-dodecyl acrylate, methyl methacrylate and ethyl methacrylate; (meth)acrylic ester including an alkoxyalkyl group with carbon number of 2 to 12 such as methoxymethyl acrylate, 2-methoxyethyl acrylate and 2-methoxyethyl methacrylate; (meth)acrylic ester including a cyanoalkyl group with carbon number of 2 to 12 such as α-cyanoethyl acrylate, α-cyanoethyl methacrylate and α-cyanobutyl methacrylate; (meth)acrylic ester including a hydroxyalkyl group with carbon number of 1 to 12 such as 2-hydroxyethyl acrylate, 2-hydroxypropyl acrylate and 2-hydroxyethyl methacrylate; (meth)acrylic ester including a fluoroalkyl group with carbon number of 1 to 12 such as trifluoroethyl acrylate and tetrafluoropropyl methacrylate; α,β-ethylenically unsaturated dicarboxylic acid dialkyl ester such as dimethyl maleate, dimethyl fumarate, dimethyl itaconate and diethyl itaconate; a dialkylamino group containing a,β-ethylenically unsaturated carboxylic acid ester such as dimethylaminomethyl acrylate and diethylaminoethyl acrylate; etc.

Examples of the fluorine containing vinyl monomer may include fluoroethylvinyl ether, fluoropropylvinyl ether, o-trifluoromethylstyrene, pentafluoro vinylbenzoate, difluoroethylene, tetrafluoroethylene, etc.

Examples of the copolymerizable anti-aging agent may include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, etc.

These other copolymerizable monomers above may be used in combination. A content of the other monomer unit with respect to all monomer units constituting highly saturated nitrile rubber (A) is preferably 40 wt% or less, more preferably 30 wt% or less, and the most preferably 30 wt% or less.

Iodine value of highly saturated nitrile rubber (A) is 120 or less, preferably 60 or less, and the most preferably 30 or less. In case when iodine value of highly saturated nitrile rubber (A) is too high, it is likely to lower heat resistance and ozone resistance of the obtained hardened adhesive layer.

Polymer mooney viscosity [ML₁₊₄ (100°C)] of highly saturated nitrile rubber (A) is preferably 15 to 250, more preferably 20 to 200 and the most preferably 30 to 150. In case when polymer mooney viscosity of highly saturated nitrile rubber (A) is too low, mechanical properties of the obtained hardened adhesive layer may be reduced; while when too high, adhesion thereof may be reduced.

Latex of highly saturated nitrile rubber (A) used as the adhesive composition of the invention is obtained by copolymerizing the above monomer, hydrogenating carbon-carbon double bond in the obtained copolymer (X) (hereinafter, sometimes simply referred to as "nitrile rubber") with a conventionally known method when necessary, and emulsifying thereof when necessary as well. Though polymerization method is not particularly limited and any known polymerization method can be used, emulsion polymerization is preferable in view of an industrial productivity.

As concrete methods of the hydrogenation, there may be mentioned (i) a hydrogenating method wherein copolymer (X) in latex state is hydrogenated using gaseous hydrogen, (ii) a method wherein hydrogen atom is added to copolymer (X) in latex state by using a reducing agent such as hydrazine, (iii) a method wherein copolymer (X) in latex state is coagulated, dried and separated, solving thereof to an organic solvent, hydrogenating the solved copolymer (X), and then making thereof to a latex state by phase inversion emulsification method, etc. In view of productivity improvement, the above method (i) is preferable.

Conventionally known methods can be used for the emulsion polymerization. Emulsifier used in the polymerization is generally anionic surfactant, cationic surfactant, nonionic surfactant, the amphoteric surfactant, etc. Among all, anionic surfactant is preferable; and although the amount used thereof is not particularly limited, in view of adhesive force of the adhesive composition obtained from this latex, it is 1 to 10 wt% and preferably 2 to 6 wt% with respect to 100 wt% of all monomers. Polymerization initiator conventionally in use can be used.

Polymerization method is not particularly limited; and it may be batch method, semibatch method or continuous method. Polymerization temperature and polymerization pressure are also not particularly limited.

Note, in case when an amount of the carbon-carbon double bond (derived from conjugated diene monomer unit) in copolymer (X) is small, which causes iodine value of the obtained nitrile rubber by emulsifying polymerization to be desired value or less, hydrogenation is not necessarily required

In the above method (i), it is preferable that latex of copolymer (X) adjusted by emulsifying polymerization is diluted by water when required, and then hydrogen is supplied in the presence of a hydrogenation catalyst performing hydrogenation reaction.

The hydrogenation catalyst is not particularly limited if it is a compound hardly decomposed by water.

Concrete examples thereof include, as palladium catalyst, palladium salts of carboxylic acid such as formic acid, propionic acid, lauric acid, succinic acid, oleic acid and phthalic acid; palladium chlorinated compounds such as palladium chloride, dichloro(cyclooctadiene)palladium, dichloro(norbornadiene)palladium and hexachloropalladium acid (IV) ammonium; iodide compounds such as iodide palladium; palladium sulfide dihydrate.

Among all, the palladium salt of carboxylic acid, dichloro(norbornadiene)palladium and hexachloropalladium acid (IV) ammonium are the most preferable.

Although the amount of the hydrogenation catalyst used is suitably determined, it is preferably 5 to 6,000wt.ppm and more preferably 10 to 4,000wt.ppm.

The reaction temperature of hydrogenation reaction is preferably 0 to 300 °C, more preferably 20 to 150 °C, and the most preferably 30 to 100 °C.

In case when the reaction temperature is too low, the reaction rate will be at the risk of being lowered, while when too high, a side reaction such as a hydrogenation of nitrile group may be induced.

A hydrogen pressure is preferably 0.1 to 30 MPa and more preferably 0.5 to 20 MPa. In addition, a reaction time is preferably 0.5 to 15 hours, more preferably 1 to 15 hours, and the most preferably 1 to 10 hours.

An average particle diameter of latex of thus obtained highly saturated nitrile rubber (A) is preferably 0.01 to 0.5µm. Solid concentration of said latex, in order to prevent coagulation, is preferably 60 wt% or less, more preferably 5 to 60 wt%, and the most preferably 5 to 50 wt%.

The adhesive composition of the present invention includes latex of highly saturated nitrile rubber (A).

Content of highly saturated nitrile rubber (A) in the adhesive composition of the present invention is preferably 5 to 60 wt%, and more preferably 10 to 50 wt%.

### Cross linking aid (B)

Adhesive composition of the present invention comprises a cross linking aid (B) having 2 or more ethylenically unsaturated groups in a molecule, and is maleimides having 2 or more ethylenically unsaturated groups in a molecule, selected from the group consisting of N,N-m-phenylenedimaleimide, 4,4'-diphenylmethane bismaleimide, bisphenol A diphenylether bismaleimide, 3,3'-dimethyl-5,5'-diethyl-4,4'-diphenylmethane bismaleimide, and N,N-(4-methyl-1,3-phenytene)bis(maleimide). Among the maleimides having 2 or more ethylenically unsaturated groups in a molecule, 4,4'-diphenylmethane bismaleimide and N,N-m-phenylenedimaleimide are preferable to make effects of the invention remarkable. Note, for instance, carbon-carbon double bond at both terminals of 4,4'-diphenylmethane bismaleimide of the following formula (1) is the "ethylenically unsaturated groups".

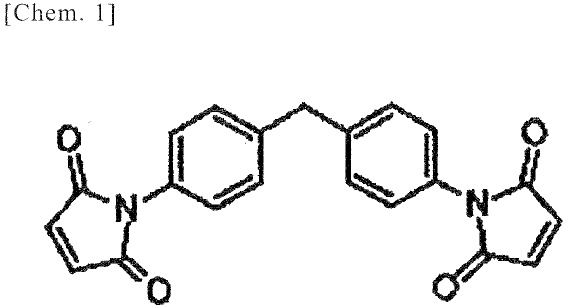

The above cross linking aid (B) having 2 or more ethylenically unsaturated groups in a molecule may be used alone or two or more may be used in combination.

Cross linking aid (B) is preferably 1 to 100 pts.wt. and more preferably 5 to 60 pts.wt. with respect to 100 pts.wt. of highly saturated nitrile rubber (A). In case when said amount used is too high, flexibility of the obtained hardened adhesive layer may be reduced; while when too low, an abrasion resistance property after heating of the obtained hardened adhesive layer tends to deteriorate.

Cross linking aid (B) in water dispersed state (aqueous dispersion) is preferably added to latex of highly saturated nitrile rubber (A).

Adhesive composition of the invention may include crosslinking agent, and an organic peroxide crosslinking agent is preferable for the crosslinking agent.

Examples of the organic peroxidecrosslinking agent may include 1,3-bis(t-butylperoxyisopropyl)benzene, cumene hydroperoxide, p-menthane hydroperoxide, di-t-butyl peroxide, t-butyl cumyl peroxide, acetyl peroxide, isobutyryl peroxide, octanoyl peroxide, dibenzoyl peroxide, 3,5,5-trimethylhexanoyl peroxide, t-butyl peroxyisobutyrate, etc. Among all, 1,3-bis(t-butylperoxyisopropyl)benzene is preferable. Note that the above organic peroxidecrosslinking agent may be used alone or two or more may be used in combination.

Content amount of the cross linking aid in the adhesive composition of the invention, when included, is preferably 0.1 to 10pts.wt., and more preferably 0.5 to 5 pts.wt., with respect to 100pts.wt. of highly saturated nitrile rubber (A).

The adhesive composition of the invention is preferable to include reinforcing agent such as carbon black, silica, etc., and more preferable to include carbon black, in view of improving an abrasion resistance property. As carbon black, furnace black, acetylene black, thermal black, channel black, etc. may be used.

Content of reinforcing agent in adhesive composition of the invention is preferably 1 to 100pts.wt., more preferably 1 to 50pts.wt., and the most preferably 2 to 20pts.wt., with respect to 100pts.wt. of highly saturated nitrile rubber (A) in said adhesive composition.

The adhesive composition of the invention may include resins such as resorcinol-formaldehyde resin, melamine resin, epoxy resin and isocyanate resin; fillers such as calcium carbonate, aluminum silicate, magnesium silicate, calcium silicate, talc and clay; metallic oxide, plasticizer and anti-aging agent.

### A composite of a fiber base material and a highly saturated nitrile rubber

An example of the composite, obtained by bonding the adhesive composition of the invention, is a composite of a fiber base material and a highly saturated nitrile rubber made from the fiber base material and the highly saturated nitrile rubber.

Physical form of the composite of a fiber base material and a highly saturated nitrile rubber is not particularly limited; however, sticking the fiber base material and the highly saturated nitrile rubber and burying whole of or a part of the fiber base material to the highly saturated nitrile rubber, etc. may be exemplified.

A kind of fiber constituting the fiber base material is not particularly limited; concrete examples thereof may include polyester fibers, nylon fibers, vinylon fibers, polyamide fibers such as aramid (aromatic polyamide) fibers, glass fibers, cotton, rayon fibers, etc.

A shape of the fiber base material is not particularly limited; and concrete examples thereof include a filament, a staple, a code shape, a rope shape and a woven fabric such as canvas. It is suitably determined according to the use of the composite of a fiber base material and a highly saturated nitrile rubber. Examples may include a core-wire contained highly saturated nitrile rubber made toothed belt by using the code shape as fiber base material, and a base cloth covered highly saturated nitrile rubber made toothed belt using a fiber base material in a state of base cloth such as canvas, etc.

A highly saturated nitrile rubber (hereinafter, it is defined as "highly saturated nitrile rubber (C)" to distinguish from highly saturated nitrile rubber (A) used in the adhesive composition. Highly saturated nitrile rubber (C) and highly saturated nitrile rubber (A) may be the same or may be different; however, it is preferable that they are different.) used in the composite of a fiber base material and a highly saturated nitrile rubber is a copolymer obtained by copolymerizing essential monomers of conjugated diene and α,β-ethylenically unsaturated nitrile and, when necessary, monomers copolymerizable with the essential monomers and hydrogenating thereof. Examples of the other copolymerizable monomers may include the same monomers used to synthesize highly saturated nitrile rubber (A).

Concrete examples of highly saturated nitrile rubber (C) may include a highly saturated butadiene-acrylonitrile copolymer rubber, a carboxyl group included highly saturated butadiene-acrylonitrile copolymer rubber, a highly saturated isoprene-butadiene-acrylonitrile copolymer rubber, a highly saturated isoprene-acrylonitrile copolymer rubber, a highly saturated butadiene-methyl acrylate acrylonitrile copolymer rubber, a highly saturated butadiene-acrylic acid-acrylonitrile copolymer rubber, a highly saturated butadiene-ethylene-acrylonitrile copolymer rubber, etc.

Among all, as the highly saturated nitrile rubber (C) for the composite of a fiber base material and a highly saturated nitrile rubber used for an automobile in particular, a highly saturated butadiene-acrylonitrile copolymer rubber is preferable in view of oil resistance and heat resistance.

Hydrogenation rate of highly saturated nitrile rubber (C), in terms of an iodine value, it is preferably 120 or less, more preferably 100 or less and the most preferably 50 or less. In case when the iodine value is too high, heat resistance of the obtained composite of a fiber base material and a highly saturated nitrile rubber is likely to lower.

Content of α,β-ethylenically unsaturated nitrile monomer unit in highly saturated nitrile rubber (C) with respect to all monomer units constituting highly saturated nitrile rubber (C) is preferably 10 to 60 wt%, more preferably 15 to 50 wt%, and the most preferably 20 to 50 wt%. In case when said content of α,β-ethylenically unsaturated nitrile monomer unit is too small, oil resistance of the composite of a fiber base material and a highly saturated nitrile rubber may deteriorate, while too large, low-temperature resistance thereof may decrease.

Mooney viscosity [ML₁₊₄ (100°C)] of highly saturated nitrile rubber (C) is preferably 10 to 300, more preferably 20 to 250 and the most preferably 30 to 200. In case when mooney viscosity of highly saturated nitrile rubber (C) is too low, mechanical and formability properties may be deteriorated; while when too high, formability property thereof may be deteriorated.

The highly saturated nitrile rubber (C) may include, in addition to crosslinking agents such as sulfer, an organic peroxide crosslinking agent, and a polyamine crosslinking agent, compounding agents generally blended when rubber processing, such as reinforcing agents of carbon black, silica, short fiber, etc.; an anti-aging agent; a plasticizer; a pigment; a tackifier; a processing aid; an antiscorcing agent; and silane coupling agent when required. Among all, it is preferable to add the crosslinking agent, and it is the most preferable to add the organic peroxide crosslinking agent.

Examples of the organic peroxide crosslinking agent may include a, a'-bis(t-butylperoxyisopropyl)benzene, cumene hydroperoxide, p-menthane hydroperoxide, di-t-butyl peroxide, t-butyl cumyl peroxide, acetyl peroxide, isobutyryl peroxide, octanoyl peroxide, dibenzoyl peroxide, 3,5,5-trimethylhexanoyl peroxide, t-butyl peroxyisobutyrate, etc. Among all, a, a'-bis(t-butylperoxyisopropyl)benzene is preferable. The above organic peroxide crosslinking agents may be used alone or in combination of two or more.

Compounding amount, when compounding crosslinking agents to highly saturated nitrile rubber (C), is preferably 0.1 to 20 pts.wt. and more preferably 1 to 10 pts.wt. with respect to 100pts.wt. of highly saturated nitrile rubber (C).

Method to obtain composite of a fiber base material and a highly saturated nitrile rubber is not particularly limited; however, it may be performed by placing a fiber base material, on which adhesive composition of the invention is bonded by dip treatment and the like, on highly saturated nitrile rubber (C), and then heating and pressing thereof.

The pressing may be performed by using a press molding machine, a metal roll, an injection molding machine, etc.

Pressure of the pressing is preferably 0.5 to 20 MPa and more preferably 2 to 10 MPa; heat temperature is preferably 130 to 300°C and more preferably 150 to 250°C; and the operation time is preferably 1 to 180 mins, and more preferably 5 to 120 mins.

According to the above method, vulcanizing and molding of highly saturated nitrile rubber (C) and bonding between the fiber base material and highly saturated nitrile rubber (C) can be done simultaneously.

In order to attain a desired surface shape of highly saturated nitrile rubber (C) in the objective composite of a fiber base material and a highly saturated nitrile rubber, a mold on inner face of compressor mold or on roll surface may be formed.

An embodiment of the composite of a fiber base material and a highly saturated nitrile rubber may include a composite of a fiber base material and a highly saturated nitrile rubber and a fiber base material.

The composite of a fiber base material and a highly saturated nitrile rubber and a fiber base material is, for instance, a combination of a fiber base material (it may be a combination of two or more fiber base materials) and a composite of a fiber base material and a highly saturated nitrile rubber.

In concrete, a core-wire of the fiber base material, highly saturated nitrile rubber (C) and a base cloth of the fiber base material are laminated (the adhesive composition of the invention is suitably bonded to the core-wire and the base cloth at this time), and then pressured while heated thereof.

The composite of a fiber base material and a highly saturated nitrile rubber obtained by bonding adhesive composition of the invention is superior in a mechanical strength, an abrasion resistance property and a water resistance property.

Therefore, it is preferable for belts such as flat belt, V belt, V ribbed belt, round belt, square belt, toothed belt, etc; it is the most preferable for in-oil belt.

Further, the composite of a fiber base material and a highly saturated nitrile rubber obtained by bonding the adhesive composition of the invention is preferably used for hose, tube, diaphragm, tire, etc.

The hose exemplifies single pipe rubber hose, multilayer rubber hose, braiding reinforced hose, winding reinforced hose, etc. The diaphragm exemplifies flat diaphragm, rolling diaphragm, etc.

The composite of a fiber base material and a highly saturated nitrile rubber obtained by bonding the adhesive composition of the invention may be used for industrial products such as seal, rubber roll, etc., in addition to the above use. The seal exemplifies moving part seals, such as for rotating, rocking, reciprocating, etc., and fixing part seals. The moving part seals exemplify oil seal, piston seal, mechanical seal, boots, dust cover, diaphragm, accumulator, etc. The fixing part seals exemplify O-ring, various gaskets, etc.

Examples of the rubber roll may include rolls which are parts of office automation equipments such as a printing equipment, a copying equipment, etc.; fiber processing rolls such as stretching rolls for spinning and draft rolls for spinning, etc.; iron making rolls such as bridle roll, snubber roll, steering roll, etc.

### EXAMPLES

Hereinafter, the present invention will be described based on the examples. Note that, "parts" in the present examples are based on the weight unless mentioned otherwise.

In the examples and the comparative examples, various properties are evaluated as follows.

### Composition analysis of rubber included in highly saturated nitrile rubber latex

Content ratio of each monomer unit in highly saturated nitrile rubber included in highly saturated nitrile rubber latex was measured with the following methods.

At first, an excess amount of methanol was added to highly saturated nitrile rubber latex, deposited rubber was removed, and then stirred and washed thereof with methanol for several times. Subsequently, it was dried for 24 hrs. under a reduced pressure at 60°C, and then highly saturated nitrile rubber was obtained. Content ratio of each monomer unit constituting thus obtained highly saturated nitrile rubber was measured with the following methods.

Namely, content ratios of mono n-butyl maleate unit and methacrylate unit were calculated as following. 0.2g of highly saturated nitrile rubber in square with a side 2 mm long was dissolved by adding 100 ml of 2-butanon and stirred thereof for 16 hrs. And then 20 ml of ethanol and 10 ml of water were added, stirred thereof, and a mole number of carboxyl groups per 100 g of the highly saturated nitrile rubber was obtained by titration using 0.02N ethanol solution of potassium hydroxide with thymolphtalein as the indicator at room temperature. Thus obtained mole number was converted to mono n-butyl maleate unit and methacrylate unit.

Content ratio of acrylonitrile unit was calculated by measuring nitrogen content in highly saturated nitrile rubber by Kjeldahl method in accordance with JIS K6384.

Content ratio of 1,3-butadiene unit (including a hydrogenated part) was measured in the same way as above: an excess amount of methanol was added to nitrile rubber latex before hydrogenation reaction, and then washed and dried the deposited rubber. And nitrile rubber before hydrogenation reaction was obtained; and it was calculated by measuring an iodine value (in accordance with JIS K 6235) thereof.

### Iodine Value

Iodine value was measured in accordance with JIS K6235 by using highly saturated nitrile rubber obtained by the same method with the above rubber composition analysis.

### Abrasion resistance test of the composite of a fiber base material and a highly saturated nitrile rubber after heat aging

A composite of a nylon base cloth of 15cm long and 15cm wide as a fiber base material and a highly saturated nitrile rubber was held in gear oven at 150 °C for 168hrs. And then, an abrasion resistance property of the composite was evaluated by using Taber's abrasion tester (tradename "Taber Abraser 5150", made by TALEDYNE TABER) and rubbing with disc of nylon base cloth side. Test conditions were load of 1.0kg, surface temperature of the abrasion at 120 °C (an infrared light lamp irradiation) and number of disc revolution for 15,000 times (rotational speed 60rpm).

Abrasion resistance properties after heat aging were evaluated with abrasion loss amount on nylon base cloth side by 7 grades according to the following standard.
7: nylon base cloth side: general surface (abrasion loss amount of less than 1%)
6: nylon base cloth side: abrasion of 1% or more and less than 15%
5: nylon base cloth side: abrasion of 15% or more and less than 30%
4: nylon base cloth side: abrasion of 30% or more and less than 45%
3: nylon base cloth side: abrasion of 45% or more and less than 60%
2: nylon base cloth side: abrasion of 60% or more and less than 75%
1: nylon base cloth side: abrasion of 75% or more

### Synthesis Example 1

To a reaction vessel, 180 parts of ion-exchange water, 25 parts of sodium dodecylbenzenesulfonate solution in a concentration of 10 wt%, 37 parts of acrylonitrile, 4 parts of mono-n-butyl maleate and 0.65 part of t-dodecyl mercaptan (a molecular weight modifier) were added in sequence, and after replacing the internal gas with nitrogen for 3 times, 57 parts of 1,3-butadiene were added. The reaction vessel was kept at 5°C, and added with 0.1 part of cumene hydroperoxide (a polymerization initiator) to continue polymerization reaction with stirring the reaction vessel. And when polymerization conversion was 40% and 60%, 1 part of mono-n-butyl maleate were respectively added. Next, when polymerization conversion reached 85%, 0.1 part of hydroquinone aqueous solution (polymerization terminator) in a concentration of 10 wt% was added to terminate the polymerization, and the remaining monomers were removed under a reduced pressure with a water-temperature of 60°C to obtain a latex of an nitrile rubber (X1) (a solid content concentration of about 30 wt%).

So as to have a palladium content of 1,000 wt.ppm with respect to dry weight of the rubber included in the above obtained latex of nitrile rubber (X1), latex of nitrile rubber (XI) and palladium catalyst (a mixed solution of equivalent weights of 1 wt% palladium acetate-acetone solution and ion-exchange water) were added into an autoclave, and hydrogenation reaction was performed at a hydrogen pressure of 3 MPa and a temperature at 50°C for 6 hours to obtain latex (L1-1) of a highly-saturated nitrile rubber (A1-1) (a solid content concentration of 30 wt%) by adjusting solid content concentration.

Content ratio of each monomer unit in highly-saturated nitrile rubber (A1-1) was 35.7 wt% of acrylonitrile unit, 5.7 wt% of mono-n-butyl maleate unit and 58.6 wt% of 1,3-butadiene unit (including hydrogenated parts). Iodine value was 9.

### Synthesis Example 2

Except for changing additional amount of palladium catalyst so as to have a palladium content of 700 wt.ppm with respect to dry weight of the rubber included in latex of nitrile rubber (XI) in Synthesis Example 1, the same procedures as in the Synthesis Example 1 were conducted to prepare latex (L1-2) (a solid content concentration of 30 wt%) of a highly-saturated nitrile rubber (A1-2).

Content ratio of each monomer unit in highly-saturated nitrile rubber (A1-2) was 35.7 wt% of acrylonitrile unit, 5.7 wt% of mono-n-butyl maleate unit and 58.6 wt% of 1,3-butadiene unit (including hydrogenated parts). Iodine value was 30.

### Synthesis Example 3

To a reaction vessel, 180 parts of ion-exchange water, 25 parts of sodium dodecylbenzenesulfonate solution in a concentration of 10 wt%, 50 parts of acrylonitrile, 6 parts of mono-n-butyl maleate and 0.65 part of t-dodecyl mercaptan (a molecular weight modifier) were added in sequence, and after replacing the internal gas with nitrogen for 3 times, 44 parts of 1,3-butadiene were added. The reaction vessel was kept at 5°C, and added with 0.1 part of cumene hydroperoxide (a polymerization initiator) to continue polymerization reaction with stirring the reaction vessel. Next, when polymerization conversion reached 85%, 0.1 part of hydroquinone aqueous solution (a polymerization terminator) in a concentration of 10 wt% was added to terminate the polymerization, and the remaining monomers were removed under a reduced pressure with a water-temperature of 60°C to obtain a latex of an nitrile rubber (X2) (a solid content concentration of about 30 wt%).

So as to have a palladium content of 1,000 wt.ppm with respect to dry weight of the rubber included in the above obtained latex of nitrile rubber (X2), latex of nitrile rubber (X2) and palladium catalyst (a mixed solution of equivalent weights of 1 wt% palladium acetate-acetone solution and ion-exchange water) were added into an autoclave, and hydrogenation reaction was performed at a hydrogen pressure of 3 MPa and a temperature at 50°C for 6 hours to obtain latex (L2) (a solid content concentration of 30 wt%) of highly-saturated nitrile rubber (A2) by adjusting solid content concentration.

Content ratio of each monomer unit in highly-saturated nitrile rubber (A2) was 44.5 wt% of acrylonitrile unit, 5.0 wt% of mono-n-butyl maleate unit and 50.5 wt% of 1,3-butadiene unit (including hydrogenated parts). Iodine value was 11.

### Synthesis Example 4

To a reaction vessel, 180 parts of ion-exchange water, 25 parts of sodium dodecylbenzenesulfonate solution in a concentration of 10 wt%, 35 parts of acrylonitrile, 4 parts of methacrylate and 0.5 part of t-dodecyl mercaptan (a molecular weight modifier) were added in sequence, and after replacing the internal gas with nitrogen for 3 times, 61 parts of 1,3-butadiene were added. The reaction vessel was kept at 5°C, and added with 0.1 part of cumene hydroperoxide (a polymerization initiator) to continue polymerization reaction with stirring the reaction vessel. Next, when polymerization conversion reached 85%, 0.1 part of hydroquinone (polymerization terminator) aqueous solution in a concentration of 10 wt% was added to terminate the polymerization, and the remaining monomers were removed under a reduced pressure with a water-temperature of 60°C to obtain a latex of an nitrile rubber (X3) (a solid content concentration of about 30 wt%).

So as to have a palladium content of 700 wt.ppm with respect to dry weight of the rubber included in the above obtained latex of nitrile rubber (X3), latex of nitrile rubber (X3) and palladium catalyst (a mixed solution of equivalent weights of 1 wt% palladium acetate-acetone solution and ion-exchange water) were added into an autoclave, and hydrogenation reaction was performed at a hydrogen pressure of 3 MPa and a temperature of 50°C for 6 hours to obtain latex (L3) (a solid content concentration of 30 wt%) of highly-saturated nitrile rubber (A3) by adjusting solid content concentration.

Content ratio of each monomer unit in highly-saturated nitrile rubber (A3) was 33.5 wt% of acrylonitrile unit, 3.5 wt% of methacrylate unit and 63.0 wt% of 1,3-butadiene unit (including hydrogenated parts). Iodine value was 32.

### Synthesis Example 5

To a reaction vessel, 180 parts of ion-exchange water, 25 parts of sodium dodecylbenzenesulfonate solution in a concentration of 10 wt%, 37 parts of acrylonitrile and 0.5 part of t-dodecyl mercaptan (a molecular weight modifier) were added in sequence, and after replacing the internal gas with nitrogen for 3 times, 63 parts of 1,3-butadiene were added. The reaction vessel was kept at 5°C, and added with 0.1 part of cumene hydroperoxide (a polymerization initiator) to continue polymerization reaction with stirring the reaction vessel. Next, when polymerization conversion reached 85%, 0.1 part of hydroquinone aqueous solution (polymerization terminator) in a concentration of 10 wt% was added to terminate the polymerization, and the remaining monomers were removed under a reduced pressure with a water-temperature of 60°C to obtain a latex of an nitrile rubber (X4) (a solid content concentration of about 30 wt%).

So as to have a palladium content of 700 wt.ppm with respect to dry weight of the rubber included in the above obtained latex of nitrile rubber (X4), latex of nitrile rubber (X4) and palladium catalyst (a mixed solution of equivalent weights of 1 wt% palladium acetate-acetone solution and ion-exchange water) were added into an autoclave, and hydrogenation reaction was performed at a hydrogen pressure of 3 MPa and a temperature at 50°C for 6 hours to obtain latex (L4) (a solid content concentration of 30 wt%) of highly-saturated nitrile rubber (A4) by adjusting solid content concentration.

Content ratio of each monomer unit in highly-saturated nitrile rubber (A4) was 36.2 wt% of acrylonitrile unit and 63.8 wt% of 1,3-butadiene unit (including hydrogenated parts). Iodine value was 35.

### Synthesis Example 6

11 parts of resorcin, 8.1 parts of formalin (a concentration of 37 wt%) and 3 parts of sodium hydroxide (a concentration of 10 wt%) were dissolved in 194 parts of distilled water, stirred for 20 hours at room temperature, and then resorcinol-formaldehyde resin liquid (RF1) (a concentration of 6.6 wt%) was obtained.

### Example 1

Latex (L1-1) (a content amount of highly saturated nitrile rubber (A1-1) was 100 parts), 4, 4'-diphenylmethane bismaleimide (content amount of 4, 4'-diphenylmethane bismaleimide is 25 parts) which is an aqueous dispersion having a concentration of 50 wt% and N330 carbon black (content amount of N330 carbon black is 10 parts) which is an aqueous dispersion having a concentration of 25 wt% were mixed, and then an adhesive composition (p1) was obtained. A base cloth (woven fabric) made by nylon 66 as fiber base material was dipped in the adhesive composition (p1), taken out, and was coated with the adhesive composition (p1). At this time, 20 parts of the adhesive composition (p1) was made to bond with respect to 100 parts of nylon 66 made base cloth. Subsequently, adhesive composition (p1) coated base cloth was heated for 3 minutes at 150°C by an air circulating oven, and a pretreated base cloth was obtained.

In addition, the compositions described in Table 1 were kneaded with a roll, and then a crosslinking highly saturated nitrile rubber composition sheet having a thickness of about 2.5mm was manufactured.

Next, the crosslinking highly saturated nitrile rubber composition sheet was laminated on the above pretreated base cloth (a planar of 15cm length and 15cm width), and then crosslinked by holding for 30 minutes at 170°C while applying pressure of 5 MPa by a pressing machine. Then, a composite of nylon 66 made base cloth as a fiber base material and a highly saturated nitrile rubber (a composite of a fiber base material and a highly saturated nitrile rubber) was obtained. "An abrasion resistance property test on the composite of a fiber base material and a highly saturated nitrile rubber after heat aging" was performed to thus obtained composite. Results are shown in Table 2.

### Example 2

Except for further adding 1,3-bis(t-butylperoxyisopropyl)benzene (an organic peroxide) (content amount of 1,3-bis(t-butylperoxyisopropyl)benzene is 1.5 parts) which is an aqueous dispersion having a concentration of 50 wt%, the same procedures as in Example 1 were conducted to obtain an adhesive composition (p2). Except for using adhesive composition (p2) instead of adhesive composition (p1), a composite of nylon 66 made base cloth as a fiber base material and a highly saturated nitrile rubber (a composite of a fiber base material and a highly saturated nitrile rubber) was obtained in the same manner as Example 1. "An abrasion resistance property test on the composite of a fiber base material and a highly saturated nitrile rubber after heat aging" was performed to thus obtained composite. Results are shown in Table 2.

### Example 3

Except for using Latex (L1-2) (content amount of highly saturated nitrile rubber (A1-2) was 100 parts) instead of Latex (L1-1) (content amount of highly saturated nitrile rubber (A1-1) was 100 parts), the same procedures as in Example 1 were conducted to obtain an adhesive composition (p3). Except for using adhesive composition (p3) instead of adhesive composition (p1), a composite of nylon 66 made base cloth as a fiber base material and a highly saturated nitrile rubber (a composite of a fiber base material and a highly saturated nitrile rubber) was obtained in the same manner as Example 1. "An abrasion resistance property test on the composite of a fiber base material and a highly saturated nitrile rubber after heat aging" was performed to thus obtained composite. Results are shown in Table 2.

### Example 4

Except for using N,N-m-phenylenedimaleimide (content amount of N,N-m-phenylenedimaleimide is 25 parts) which is an aqueous dispersion having a concentration of 50 wt% instead of 4, 4'-diphenylmethane bismaleimide (content amount of 4, 4'-diphenylmethane bismaleimide is 25 parts) which is an aqueous dispersion having a concentration of 50 wt%, the same procedures as in Example 3 were conducted to obtain an adhesive composition (p4). Except for using adhesive composition (p4) instead of adhesive composition (p1), a composite of nylon 66 made base cloth as a fiber base material and a highly saturated nitrile rubber (a composite of a fiber base material and a highly saturated nitrile rubber) was obtained in the same manner as Example 1. "An abrasion resistance property test on the composite of a fiber base material and a highly saturated nitrile rubber after heat aging" was performed to thus obtained composite. Results are shown in Table 2.

### Example 5

Except for using Latex (L2) (content amount of highly saturated nitrile rubber (A2) was 100 parts) instead of Latex (LI-1) (content amount of highly saturated nitrile rubber (A1-1) was 100 parts), the same procedures as in Example 1 were conducted to obtain an adhesive composition (p5). Except for using adhesive composition (p5) instead of adhesive composition (p1), a composite of nylon 66 made base cloth as a fiber base material and a highly saturated nitrile rubber (a composite of a fiber base material and a highly saturated nitrile rubber) was obtained in the same manner as Example 1. "An abrasion resistance property test on the composite of a fiber base material and a highly saturated nitrile rubber after heat aging" was performed to thus obtained composite. Results are shown in Table 2.

### Comp. Ex. 1

Resorcinol-formaldehyde resin liquid (RF1) (solid amount of resorcinol-formaldehyde resin is 10 parts) and 65.2 parts of distilled water were added to latex (L1-1) (content amount of highly saturated nitrile rubber (A1-1) was 100 parts), and stirred thereof. Subsequently left for 20 hours at 25 °C, and then, N330 carbon black (content amount of carbon black was 100 parts) which is an aqueous dispersion having a concentration of 25 wt% was mixed to obtain adhesive composition (pc1). Except for using adhesive composition (pc1) instead of adhesive composition (p1), a composite of nylon 66 made base cloth as a fiber base material and a highly saturated nitrile rubber (a composite of a fiber base material and a highly saturated nitrile rubber) was obtained in the same manner as Example 1. "An abrasion resistance property test on the composite of a fiber base material and a highly saturated nitrile rubber after heat aging" was performed to thus obtained composite. Results are shown in Table 2.

### Comp. Ex. 2

Except for changing latex (L1-2) (content amount of highly saturated nitrile rubber (A1-2) was 100 parts) to latex (L3) (content amount of highly saturated nitrile rubber (A3) was 100 parts) when obtaining an adhesive composition, adhesive composition (pc2) was obtained in the same manner as Example 4. Except for using adhesive composition (pc2) instead of adhesive composition (p1), a composite of nylon 66 made base cloth as a fiber base material and a highly saturated nitrile rubber (a composite of a fiber base material and a highly saturated nitrile rubber) was obtained in the same manner as Example 1. "An abrasion resistance property test on the composite of a fiber base material and a highly saturated nitrile rubber after heat aging" was performed to thus obtained composite. Results are shown in Table 2.

### Comp. Ex. 3

Except for changing latex (L1-1) (content amount of highly saturated nitrile rubber (A1-1) was 100 parts) to latex (L4) (content amount of highly saturated nitrile rubber (A4) was 100 parts) when obtaining an adhesive composition, adhesive composition (pc3) was obtained in the same manner as Example 1. Except for using adhesive composition (pc3) instead of adhesive composition (p1), a composite of nylon 66 made base cloth as a fiber base material and a highly saturated nitrile rubber (a composite of a fiber base material and a highly saturated nitrile rubber) was obtained in the same manner as Example 1. "An abrasion resistance property test on the composite of a fiber base material and a highly saturated nitrile rubber after heat aging" was performed to thus obtained composite. Results are shown in Table 2.

**[Table 1]**

| Compounding components | | Parts |
|---|---|---|
| Zetpol 2000 | (*1) | 70 |
| ZSC2095 | (*2) | 30 |
| N550 carbon black | (*3) | 20 |
| Trimellitic Acid Tri(2-ethylhexyl) | (*4) | 5 |
| Substituted diphenylamine | (*5) | 1.5 |
| 2-mercaptobenzimidazole zinc salt | (*6) | 1.5 |
| Copolyparaphenylene 3,4'-oxydiphenylene terephthalamide staple fibers | (*7) | 5 |
| *α, α'* -bis(t-butylperoxyisopropyl)benzene, 40 wt% | (*8) | 7 |

| | | |
|---|---|---|
| (*1) Highly saturated nitrile rubber, iodine value 11, 36 wt% of acrylonitrile monomer unit (manufactured by ZEON CORPORATION) (*2) Highly saturated nitrile rubber composition including zinc dimethacrylate (manufactured by ZEON CORPORATION) (*3) Trade name "Seast SO" carbon black (manufactured by Tokai Carbon Co., Ltd.) (*4) Trade name "ADEKA CIZER C-8", plasticizer (manufactured by ADEKA CORPORATION) (*5) Trade name "Nocrac CD" anti-aging agents (manufactured by Ouchi Shinko Chemical Industrial Co., LTD.) (*6) Trade name "Nocrac MBZ" anti-aging agents (manufactured by Ouchi Shinko Chemical Industrial Co., LTD.) Trade name "Technora ZCF 1-12 T323SB 1mm" para-type aramid staple fiber, (*7) an average fiber length of 1mm, an average fiber diameter of 12*µ*m (manufactured by TEIJIN LIMITED) (*8) Trade name "PEROXYMON F-40", an organic peroxide crosslinking agent (manufactured by NOF CORPORATION) | | |

**[Table 2]**

| | | | Ex. | | | | | Comp. Ex. | | |
|---|---|---|---|---|---|---|---|---|---|---|
| | | | 1 | 2 | 3 | 4 | 5 | 1 | 2 | 3 |
| Adhesive composition | | | p1 | p2 | p3 | p4 | p5 | pc1 | pc2 | pc3 |
| Used latex | | | L1-1 | L1-1 | L1-2 | L1-2 | L2 | L1-1 | L3 | L4 |
| Highly saturated nitrile rubber in latex | | | A1-1 | A1-1 | A1-2 | A1-2 | A2 | A1-1 | A3 | A4 |
| Iodine value | | | 9 | 9 | 30 | 30 | 11 | 9 | 32 | 35 |
| Highly saturated nitrile rubber composition | Acrylonitrile unit | (%) | 35.7 | 35.7 | 35.7 | 35.7 | 44.5 | 35.7 | 33.5 | 36.2 |
| | 1,3-butadiene unit*) | (%) | 58.6 | 58.6 | 58.6 | 58.6 | 50.5 | 58.6 | 63.0 | 63.8 |
| | Mono-n-butyl maleate unit | (%) | 5.7 | 5.7 | 5.7 | 5.7 | 5.0 | 5.7 | - | - |
| | Methacrylate unit | (%) | - | - | - | - | - | - | 3.5 | - |
| Adhesive composition (solid contents) | Highly saturated nitrile rubber | (parts) | 100 | 100 | 100 | 100 | 100 | 100 | 100 | 100 |
| | 4, 4'-diphenylmethane bismaleimide | (parts) | 25 | 25 | 25 | - | 25 | - | - | 25 |
| | N,N-m-phenylenedimaleimide | (parts) | - | - | - | 25 | - | - | 25 | - |
| | Resorcinol-formaldehyde resin | (parts) | - | - | - | - | - | 10 | - | - |
| | Organic peroxides | (parts) | - | 1.5 | - | - | - | - | - | - |
| | N330 carbon black | (parts) | 10 | 10 | 10 | 10 | 10 | 10 | 10 | 10 |
| Abrasion resistance tests after heat aging | | | | | | | | | | |
| | Evaluation results | | 6 | 6 | 6 | 5 | 6 | 4 | 3 | 3 |

| | | | | | | | | | | |
|---|---|---|---|---|---|---|---|---|---|---|
| *) including hydrogenated parts | | | | | | | | | | |

Table 2 shows that in case when the adhesive composition of the invention comprising: latex of a highly saturated nitrile rubber, which comprises the α,β-ethylenically unsaturated nitrile monomer unit, the conjugated diene monomer unit and the α,β-ethylenically unsaturated dicarboxylic acid monoester monomer unit and has an iodine value of 120 or less; and a crosslinking aid (which has 2 or more ethylenically unsaturated groups in a molecule) which has two maleimide groups in a molecule was used, the composite of nylon 66 made base cloth and a highly saturated nitrile rubber (the composite of a fiber base material and a highly saturated nitrile rubber) was superior in an abrasion resistance property after heat aging (Ex. 1 to 5).

To the contrary, when an adhesive composition, including latex of highly saturated nitrile rubber and resorcinol-formaldehyde resin while not including a crosslinking aid which has 2 or more ethylenically unsaturated groups in a molecule, and which do not satisfy the requirements of the invention, was used, the composite of nylon 66 made base cloth and a highly saturated nitrile rubber (the composite of a fiber base material and a highly saturated nitrile rubber) was inferior in an abrasion resistance property after heat aging (Comp. Ex. 1)

Further, even when an adhesive composition includes a crosslinking aid which has two maleimide groups in a molecule (a crosslinking aid which has two or more ethylenically unsaturated groups in a molecule), said adhesive composition may not satisfy the requirements of the invention by including latex of a highly saturated nitrile rubber which do not include α,β-cthylenically unsaturated dicarboxylic acid monoester monomer unit; and when said adhesive composition was used, the composite of nylon 66 made base cloth and a highly saturated nitrile rubber (the composite of a fiber base material and a highly saturated nitrile rubber) was inferior in an abrasion resistance property after heat aging (Comp. Ex. 2 and Comp. Ex. 3).

## Claims

1. An adhesive composition comprising:
a latex of a highly saturated nitrile rubber (A), which comprises 10 to 55 wt% of an α,β-ethylenically unsaturated nitrile monomer unit, 25 to 89 wt% of a conjugated diene monomer unit and 1 to 20 wt% of an α,β-ethytenically unsaturated dicarboxylic acid monoester monomer unit and has an iodine value measured in accordance with JIS K6235 of 120 or less, and
a crosslinking aid (B) which has 2 or more ethylenically unsaturated groups in a molecule and is at least one maleimide selected from the group consisting of N,N-m-phenylenedimaleimide, 4,4'-diphenylmethane bismaleimide, bisphenol A diphenylether bismaleimide, 3,3'-dimethyl-5,5'-diethyl-4,4'-diphenylmethane bismaleimide, and N,N-(4-methyl-1,3-phenylene )bis(maleimide).

2. The adhesive composition as set forth in claim 1, wherein said α,β-ethylenically unsaturated dicarboxylic acid monoester monomer unit is α,β-ethylenically unsaturated dicarboxylic acid monoalkylester monomer unit.

3. The adhesive composition as set forth in claim 2, wherein said α,β-ethylenically unsaturated dicarboxylic acid monoalkylester monomer unit is mono n-butyl maleate unit.

4. The adhesive composition as set forth in any one of claims 1 to 3, wherein said cross linking aid (B) is added in water dispersed state (aqueous dispersion) to the latex of highly saturated nitrile rubber (A).

5. The adhesive composition as set forth in any one of claims 1 to 4, wherein said cross linking aid (B) is contained in a range of 1 to 100 parts by weight with respect to 100 parts by weight of highly saturated nitrile rubber (A).

6. The adhesive composition as set forth in any one of claims 1 to 5, further including a crosslinking agent, preferably an organic peroxide crosslinking agent.

7. The adhesive composition as set forth in any one of claims 1 to 6, further including a reinforcing agent.

8. The adhesive composition as set forth in any one of claims 1 to 7, wherein the reinforcing agent is selected from carbon black and silica.

9. A composite of a fiber base material and a highly saturated nitrile rubber wherein the fiber base material and the highly saturated nitrile rubber are bonded by the adhesive composition as set forth in any one of claims 1 to 8.

10. The composite of a fiber base material and a highly saturated nitrile rubber as set forth in claim 9 wherein the composite is belt, hose, diaphragm or tire.

11. The composite of a fiber base material and a highly saturated nitrile rubber as set forth in claim 9 or 10, wherein the fiber base material is a code or a woven fabric.

## Patentansprüche

1. Haftmittelzusammensetzung, umfassend:
einen Latex aus einem hochgesättigten Nitrilkautschuk (A), welcher 10 bis 55 Gew.-% einer α,β-ethylenisch ungesättigten Nitrilmonomereinheit, 25 bis 89 Gew.-% einer konjugierten Dienmonomereinheit und 1 bis 20 Gew.-% einer α,β-ethylenisch ungesättigten Dicarbonsäuremonoestermonomereinheit umfasst und eine Iodzahl von 120 oder weniger, gemessen gemäß JIS K6235, hat, sowie
ein Vernetzungshilfsmittel (B), welches 2 oder mehr ethylenisch ungesättigte Gruppen in einem Molekül aufweist und wenigstens ein Maleimid ist, ausgewählt aus der Gruppe, bestehend aus N,N-m-Phenylendimaleimid, 4,4'-Diphenylmethanbismaleimid, Bisphenol-A-diphenyletherbismaleimid, 3,3'-Dimethyl-5,5'-diethyl-4,4'-diphenylmethanbismaleimid und N,N-(4-Methyl-1,3-phenylen)bis(maleimid) .

2. Haftmittelzusammensetzung gemäß Anspruch 1, wobei die α,β-ethylenisch ungesättigte Dicarbonsäuremonoestermonomereinheit eine a,β-ethylenisch ungesättigte Dicarbonsäuremonoalkylestermonomereinheit ist.

3. Haftmittelzusammensetzung gemäß Anspruch 2, wobei die α,β-ethylenisch ungesättigte Dicarbonsäuremonoalkylestermonomereinheit Mono-n-butylmaleateinheit ist.

4. Haftmittelzusammensetzung gemäß einem der Ansprüche 1 bis 3, wobei das Vernetzungshilfsmittel (B) in einem wasserdispergierten Zustand (wässrige Dispersion) zu dem Latex aus dem hochgesättigten Nitrilkautschuk (A) gegeben wird.

5. Haftmittelzusammensetzung gemäß einem der Ansprüche 1 bis 4, wobei das Vernetzungshilfsmittel (B) in einem Bereich von 1 bis 100 Teilen nach Gewicht bezüglich 100 Teilen nach Gewicht des hochgesättigten Nitrilkautschuks (A) enthalten ist.

6. Haftmittelzusammensetzung gemäß einem der Ansprüche 1 bis 5, des Weiteren umfassend ein Vernetzungsmittel, vorzugsweise ein organisches Peroxid-Vernetzungsmittel.

7. Haftmittelzusammensetzung gemäß einem der Ansprüche 1 bis 6, des Weiteren umfassend ein Verstärkungsmittel.

8. Haftmittelzusammensetzung gemäß einem der Ansprüche 1 bis 7, wobei das Verstärkungsmittel ausgewählt ist aus Ruß und Siliciumdioxid.

9. Komposit aus einem Faserbasismaterial und einem hochgesättigten Nitrilkautschuk, wobei das Faserbasismaterial und der hochgesättigte Nitrilkautschuk durch die Haftmittelzusammensetzung gemäß einem der Ansprüche 1 bis 8 gebunden werden.

10. Komposit aus einem Faserbasismaterial und einem hochgesättigten Nitrilkautschuk gemäß Anspruch 9, wobei das Komposit ein Riemen, ein Schlauch, ein Diaphragma oder Reifen ist.

11. Komposit aus einem Faserbasismaterial und einem hochgesättigten Nitrilkautschuk gemäß Anspruch 9 oder 10, wobei das Faserbasismaterial Code oder ein Stoffgewebe ist.

## Revendications

1. Composition d'adhésif comprenant :
un latex d'un caoutchouc nitrile hautement saturé (A), qui comprend 10 à 55 % en poids d'un motif monomère nitrile à insaturation α,β-éthylénique, 25 à 89 % en poids d'un motif monomère diène conjugué et 1 à 20 % en poids d'un motif monomère monoester d'acide dicarboxylique à insaturation α,β-éthylénique et présente un indice d'iode mesuré selon la norme JIS K6235 de 120 ou moins, et
un auxiliaire de réticulation (B) qui présente 2 ou plus de 2 groupes à insaturation éthylénique dans une molécule et est au moins un maléimide sélectionné dans le groupe consistant en le N,N-m-phénylènedimaléimide, le 4,4'-diphénylméthane bismaléimide, le bisphénol A diphényléther bismaléimide, le 3,3'-diméthyl-5,5'-diéthyl-4,4'-diphénylméthane bismaléimide, et le N,N-(4-méthyl-1,3-phénylène)bis(maléimide).

2. Composition d'adhésif selon la revendication 1, dans laquelle ledit motif monomère monoester d'acide dicarboxylique à insaturation α,β-éthylénique est un motif monomère monoester d'alkyle d'acide dicarboxylique à insaturation α,β-éthylénique.

3. Composition d'adhésif selon la revendication 2, dans laquelle ledit motif monomère monoester d'alkyle d'acide dicarboxylique à insaturation α,β-éthylénique est un motif maléate de mono-n-butyle.

4. Composition d'adhésif selon l'une quelconque des revendications 1 à 3, dans laquelle ledit auxiliaire de réticulation (B) est ajouté dans un état dispersé dans l'eau (dispersion aqueuse) au latex de caoutchouc nitrile hautement saturé (A).

5. Composition d'adhésif selon l'une quelconque des revendications 1 à 4, dans laquelle ledit auxiliaire de réticulation (B) est contenu dans une plage allant de 1 à 100 parties en poids par rapport à 100 parties en poids de caoutchouc nitrile hautement saturé (A).

6. Composition d'adhésif selon l'une quelconque des revendications 1 à 5, incluant en outre un agent de réticulation, de préférence un agent de réticulation de type peroxyde organique.

7. Composition d'adhésif selon l'une quelconque des revendications 1 à 6, incluant en outre un agent de renforcement.

8. Composition d'adhésif selon l'une quelconque des revendications 1 à 7, dans laquelle l'agent de renforcement est sélectionné parmi un noir de carbone et une silice.

9. Composite d'un matériau fibreux de base et d'un caoutchouc nitrile hautement saturé dans lequel le matériau fibreux de base et le caoutchouc nitrile hautement saturé sont liés par la composition d'adhésif selon l'une quelconque des revendications 1 à 8.

10. Composite d'un matériau fibreux de base et d'un caoutchouc nitrile hautement saturé selon la revendication 9 dans lequel le composite est une courroie, un tuyau flexible, un diaphragme ou un pneu.

11. Composite d'un matériau fibreux de base et d'un caoutchouc nitrile hautement saturé selon la revendication 9 ou 10, dans lequel le matériau fibreux de base est un code ou un tissu tissé.
